# EUROPEAN PATENT SPECIFICATION

(11) **EP 0 546 636 B1**
(45) Date of publication and mention of the grant of the patent: **05.03.1997**
(21) Application number: 92203830.2
(22) Date of filing: 08.12.1992
(51) Int. Cl.: B62D 13/02

(54) **Pulled vehicle having steerable wheels**
Gezogenes Fahrzeug mit gelenkten Rädern
Véhicule attelé comportant des roues directrices

(30) Priority: 13.12.1991 NL 9102089
(43) Date of publication of application: 16.06.1993
(73) Proprietor: KONINKLIJKE NOOTEBOOM TRAILERS B.V., NL-6603 BV Wijchen (NL)
(72) Inventor: van den Berg, Ruth, NL-3911 XJ Rhenen (NL)
(74) Representative: Land, Addick Adrianus Gosling

(56) References cited:
- BE-A- 691 777
- DE-A- 2 407 605
- DE-A- 3 414 610
- FR-A- 1 100 375
- FR-A- 2 225 014
- FR-A- 2 666 295
- NL-A- 8 200 249
- NL-A- 8 301 612
- PATENT ABSTRACTS OF JAPAN vol. 11, no. 183 (M-598)12 June 1987 & JP-A-62 012 457 (FUJI ) 21 January 1987

## Description

Pulled vehicles comprise semi-trailers and trailers. In some countries requirements are laid down with regard to the space a vehicular combination needs when travelling through a prescribed bend. This can certainly require steerable wheels in the case of longer combinations lengths. The reduction of tyre wear can also be an objective when employing steerable wheels.

In the case of a semi-trailer the steering of the wheels is coupled to a rotary element or bougie which forms the connection between tractor and pulled vehicle and which is built into the semi-trailer. In the case of a trailer the steering of the rear wheels is coupled to the steering of the front wheels. Trailers are also known which are coupled to a tractor as if they were semi-trailer, and wherein both the front and rear wheels are steered subject to the position of the rotary element at the connection between tractor and pulled vehicle.

At loading and unloading sites such as harbours, railway complexes and the like a so-called manual control is often applied for controlling the steerable wheels, which engages onto the hydraulically embodied system and which adjusts the position of the rear wheels independently of the position of the tractor and/of front wheels. The hydraulically embodied coupling between rotary element (front wheels in the case of a trailer) and steerable wheels is herein - temporarily - broken. The pulled vehicles can then be manoeuvred better.

When use on the public highway is resumed the steerable wheels have to be returned to the correct position. This takes place for example in that a driver travels a straight path in the tractor while the steerable wheels are placed, often by another person, in the straight position visually or by using a marking while using the above mentioned manual control. It is also conceivable to first place the wheels of the semi-trailer or trailer into the straight position and to then place the tractor straight in front of the semi-trailer or trailer.

In practice this often means that when resuming use on the public highway the steering rear wheels have been returned to the correct position inexactly, or not at all, so that the tracking thereof does not follow the tracking of the tractor within a margin of several millimeters. In addition to unsafe road use, this can result in increased wear of the tyres. In the hydraulic embodiment inadequate tracking can also occur through leakage of medium from the hydraulic system.

NL-A-9301612 representing the closest prior art discloses a pulled vehicle comprising:
- a rear axle provided with steerable wheels;
- a rotary element on the front side of the vehicle;
- hydraulic coupling means between the rotary element and the steerable wheels in order to place the steerable wheels in a desired position relative to the rotary element.

FR-A-110375 discloses a pulled vehicle including a device for indicating the position of the rear axle steerable wheels. This device is coupled to the rear wheels by electro-mechanical means, for use with a manual control. The device and manual control have to be used to align the rear wheels with the front wheels and/or the pulling vehicle.

The present invention provides a pulled vehicle comprising:
- a rear axle provided with steerable wheels;
- a rotary element on the front side of the vehicle;
- hydraulic coupling means between the rotary element and the steerable wheels in order to place the steerable wheels in a desired position relative to the rotary element, characterized by:
- means for indicating the desired position of the steerable wheels in a predetermined position of the rotary element; and
- control means for controlling the hydraulic coupling means and for placing the steerable wheels in a desired position.

In the case of a semi-trailer the position of the rotary element is directly determined by the position of the tractor relative to the pulled vehicle; in the case of a trailer this position is determined by the front wheels and therefor often indirectly by the tractor. Finally, a rotary element is also known wherein a so-called jeep dolly often with non-steered wheels is received between semi-trailer and tractor; in such a combination the position of the rotary element is determined by the tractor via the jeep dolly.

Particularly in the case of one or more of the preferred embodiments according to one or more of the claims, it is achieved with relatively simple means that the rear wheels are in extremely accurate track with the tractor.

Further advantages, features and details of the present invention will be elucidated in the light of the following description of the preferred embodiment thereof with reference to the annexed drawing, in which:
Fig. 1 shows a partly schematic view in perspective of an embodiment of a pulled vehicle according to the present invention; and
Fig. 2 shows a hydraulic diagram applied in the embodiment of fig. 1.

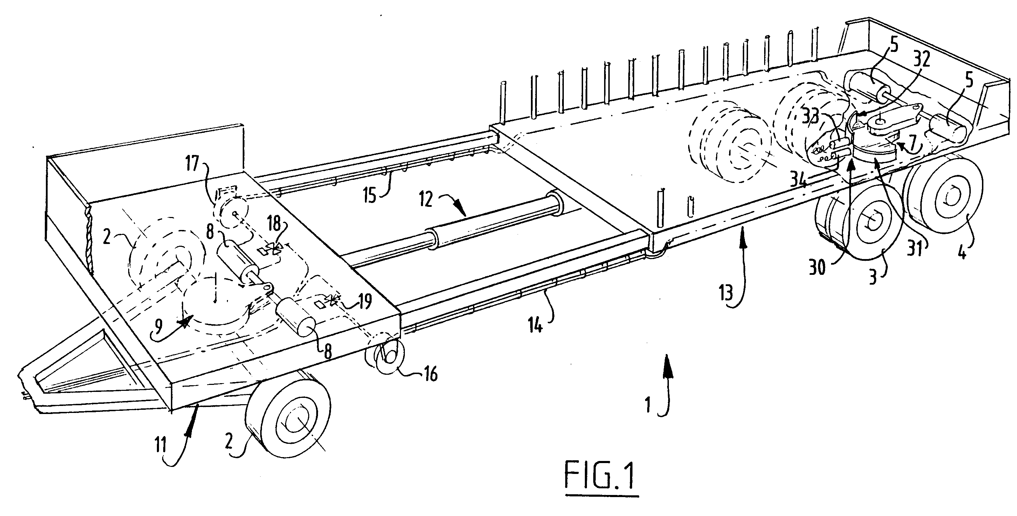

Although the present invention is equally applicable to a semi-trailer, in fig. 1 a trailer 1 is shown which is provided with a front axle with front wheels 2 (rims and tyres) and two rear axles with rear wheels 3 and 4 respectively, of which in the present case only the hindmost rear wheels 4 are steering and which are connected via a schematically designated transmission mechanism 7 to hydraulic cylinders 5 (double-action). In another embodiment (not shown) the foremost rear wheels 3 can also take a steering form.

The steering of the rear wheels is coupled to hydraulic cylinders 8 (double-action) which are coupled to the front wheels 2 via a transmission mechanism 9, of which a rotary element forms part. Because of safety regulations both the cylinders 5 and the cylinders 8 are given a double-action form so that if a hydraulic conduit should come loose the steering of the wheels remains intact.

In the case of a semi-trailer (not shown) the rotary element is formed by a coupling plate. The coupling plate is attached rotatably to the semi-trailer by means of a ball-bearing ring (preferred embodiment). The coupling pin provides the connection between coupling plate and "coupling dish" on the tractor. The "steering wedge" fixed to the coupling plate provides fixation of the coupling plate relative to the "coupling dish" on the tractor.

In the present embodiment a front part 11 is coupled via a telescope connection 12 to a rear part 13 of the trailer, so that the trailer 2 is adjustable in length. The hydraulic conduits 14 and 15 have sufficient length for the maximum length of the trailer and in the present embodiment can be wound onto and unwound from a reel. Caterpillar-like guides received in a chassis beam of the semi-trailer are likewise conceivable for these hydraulic conduits.

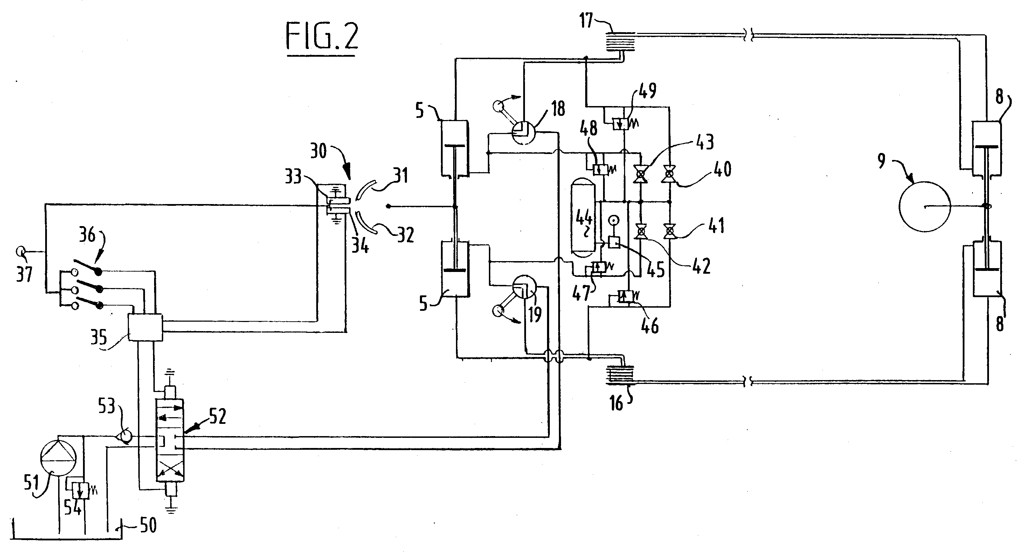

When manoeuvering the pulled vehicle, hydraulic medium can be supplied into and be drained from the hydraulic system by means of three-way valves 18 and 19 (fig. 1, 2), manually controlled in the present embodiment, using a so-called manual control, when the three-way valves are placed in the suitable position therefor. Before steering of the rear wheels can take place independently of the position of the tractor relative to the pulled vehicle, closing valves 40, 41, 42 and 43 have to be opened so that the 'fixed' hydraulic connection between the cylinders 5 and 8 is discontinued, and the hydraulic manual control operates only the hydraulic cylinders 5 via the three-way valves 18 and 19.

From a pressure tank 44 the hydraulic system is brought to and held at pressure, in the present embodiment using a compressed air connection 45. For protection against overpressure the hydraulic system is provided with safety valves 46, 47, 48 and 49.

Using a pump 51 medium can be carried in or out of the hydraulic circuit from a reservoir 50 via control valve 52 in order to enable operation of the cylinders 5 with the manual control. A non-return valve 53 is arranged between the pump 51 and the control valve 52. A reducing valve 54 is likewise incorporated at the pump 51. The control valve 52 is operated from a schematically designated control means 35 which is controlled in turn from three electrical switches 36 with which the three positions of the control valve 52 are determined. Electrical voltage is provided from a power supply connection 37. The control means may for example comprise a number of relays and the like.

Likewise supplied from the connection 37 for electrical voltage are sensors 33, 34 which form part of aligning means 30 of which arcuate segments 31, 32 likewise form part which are coupled to the position of the pistons 5 and therefore of the steering position of the rear wheels. The control valve 52 can likewise be operated via control means 35 by electrical signals coming from the sensors 33, 34 as well as by the switches 36. As can be seem particularly in fig. 1, a first sensor 33 is associated with a first arcuate segment 32 while the second sensor 34 is associated with the second arcuate segment 31 which is disposed at a higher level. If neither segment is situated in front of the sensors, the wheels 4 are set in the straight position. This is automatically achieved via control means 35 and control valve 52.

## Claims

1. A pulled vehicle (1) comprising:
- a rear axle provided with steerable wheels (4);
- a rotary element (9) on the front side (11) of the vehicle (1);
- hydraulic coupling means (5, 8, 14, 15) between the rotary element (9) and the steerable wheels (4) in order to place the steerable wheels (4) in a desired position relative to the rotary element (9),
**characterized by**
- means (30) for indicating the desired position of the steerable wheels (4) in a predetermined position of the rotary element (9); and
- control means (35) for controlling the hydraulic coupling means (5, 8, 14, 15) and for placing the steerable wheels (4) in the desired position.

2. A pulled vehicle (1) according to claim 1, wherein the control means (35) are part of means for automatically placing the wheels (4) in the straight correct position, which means further comprise at least one sensor (33, 34) connected to the control means (35), and an element (31, 32) coupled to the steerable wheels (4), to which element (31, 32) the sensor (33, 34) is sensitive.

3. A pulled vehicle (1) according to claim 1 or 2, in the form of a semi-trailer, wherein the rotary element (9) is formed by a coupling plate which is rotatably attached to the semi-trailer with a coupling pin, and which coupling pin effects the coupling between tractor and semi-trailer.

4. A pulled vehicle (1) according to claim 1 or 2, in the form of a trailer (1) wherein the rotary element (9) is coupled to the wheels (2) of a front axle, the steering position of which is determined by the position of the tractor relative to the trailer.

5. A pulled vehicle (1) as claimed in any of the claims 2-4, wherein the sensor (33, 34) is an approach switch and the element (31, 32) is arcuate.

6. A pulled vehicle (1) as claimed in claim 4 or 5, provided with two sensors (33, 34) arranged one above the other and an arcuate segment (31, 32) associated with each sensor (33, 34) on either side of the sensors (33, 34).

7. An arcuate element (31, 32) and/or sensor (33, 34) for use with a pulled vehicle (1) as claimed in any of the claims 1-6.

## Patentansprüche

1. Gezogenes Fahrzeug (1) mit:
- einer lenkbare Räder (4) aufweisenden Hinterachse;
- einem Drehelement (9) an der Vorderseite (11) des Fahrzeugs (1);
- einer hydraulischen Kopplungseinrichtung (5, 8, 14, 15) zwischen dem Drehelement (9) und den lenkbaren Rädern (4) zum Einstellen der lenkbaren Räder (4) in eine gewünschte Stellung bezüglich des Drehelements (9), gekennzeichnet durch:
- eine Einrichtung (30) zum Angeben der gewünschten Stellung der lenkbaren Räder (4) in einer vorgegebenen Stellung des Drehelements (9); und
- eine Steuereinrichtung (35) zum Steuern der hydraulischen Kopplungseinrichtung (5, 8, 14, 15) und zum Einstellen der lenkbaren Räder (4) in die gewünschte Stellung.

2. Gezogenes Fahrzeug (1) nach Anspruch 1, bei dem die Steuereinrichtung (35) Teil einer Einrichtung zum automatischen Einstellen der Räder (4) in die richtige Geradeausstellung ist, wobei die Einstelleinrichtung ferner wenigstens einen an der Steuereinrichtung (35) angeschlossenen Sensor (33, 34) und ein mit den lenkbaren Rädern (4) gekoppeltes Element (31, 32), auf das der Sensor (33, 34) anspricht, aufweist.

3. Gezogenes Fahrzeug nach Anspruch 1 oder 2, in Form eines Auflegers, wobei das Drehelement (9) in Form einer Kupplungsplatte ausgebildet ist, die am Aufleger mit einem Kupplungszapfen drehbar befestigt ist, der die Kupplung zwischen Zugfahrzeug und Aufleger herstellt.

4. Gezogenes Fahrzeug (1) nach Anspruch 1 oder 2, in Form eines Anhängers (1), wobei das Drehelement (9) an die Räder (2) einer Vorderachse gekoppelt ist, deren Lenkeinschlagstellung durch die Stellung des Zugfahrzeugs zum Anhänger bestimmt ist.

5. Gezogenes Fahrzeug (1) nach einem der Ansprüche 2 bis 4, wobei der Sensor (33, 34) ein Annäherungsschalter ist und das Element (31, 32) bogenförmig ist.

6. Gezogenes Fahrzeug (1) nach Anspruch 4 oder 5, mit zwei übereinander angeordneten Sensoren (33, 34) und zwei den Sensoren (33, 34) zugeordneten bogenförmigen Segmenten (31, 32), die zu beiden Seiten der Sensoren (33, 34) angeordnet sind.

7. Bogenförmiges Element (31, 32) und/oder Sensor (33, 34) zur Verwendung bei einem gezogenen Fahrzeug (1) nach einem der Ansprüche 1 bis 6.

## Revendications

1. Véhicule tracté (1) comprenant :
- un essieu arrière pourvu de roues directrices (4) ;
- un élément rotatif (9) à l'avant (11) du véhicule (1) ;
- des moyens de couplage hydrauliques (5, 8, 14, 15) entre l'élément rotatif (9) et les roues directrices (4) destinés à positionner les roues directrices (4) dans une position souhaitée par rapport à l'élément rotatif (9), caractérisé en ce qu'il comporte :
- des moyens (30) indiquant la position souhaitée des roues directrices (4) dans une position prédéterminée de l'élément rotatif (9) ; et
- des moyens de commande (35) destinés à commander les moyens de couplage hydrauliques (5, 8, 14, 15) et à positionner les roues directrices (4) dans la position souhaitée.

2. Véhicule tracté (1) selon la revendication 1, dans lequel les moyens de commande (35) font partie de moyens destinés à positionner automatiquement les roues (4) dans la position droite correcte, ces moyens comprenant en outre au moins un capteur (33, 34) connecté aux moyens de commande (35), et un élément (31, 32) couplé aux roues directrices (4), le capteur (33, 34) étant sensible à cet élément (31, 32).

3. Véhicule tracté (1) selon la revendication 1 ou 2, en forme de semi-remorque, dans lequel l'élément rotatif (9) est formé par une plaque de couplage fixée à la semi-remorque avec possibilité de rotation par une goupille de couplage, laquelle goupille de couplage permet le couplage entre le tracteur et la semi-remorque.

4. Véhicule tracté (1) selon la revendication 1 ou 2, en forme de remorque (1), dans lequel l'élément rotatif (9) est couplé aux roues (2) d'un essieu avant, dont la position de direction est déterminée par la position du tracteur par rapport à la remorque.

5. Véhicule tracté (1) selon l'une ou l'ensemble des revendications 2 à 4, dans lequel le capteur (33, 34) est un détecteur de proximité et l'élément (31, 32) est en arc de cercle.

6. Véhicule tracté (1) selon la revendication 4 ou 5, pourvu de deux capteurs (33, 34) disposés l'un au-dessus de l'autre et d'un segment en arc de cercle (31, 32) associé à chaque capteur (33, 34) de chaque côté des capteurs (33, 34).

7. Elément en arc de cercle (31, 32) et/ou capteur (33, 34) pour l'utilisation avec un véhicule tracté (1) selon l'une ou l'ensemble des revendications 1 à 6.
